# EUROPÄISCHE PATENTANMELDUNG

(11) **EP 2 072 321 A1**
(43) Veröffentlichungstag der Anmeldung: **24.06.2009**
(21) Anmeldenummer: 08165891.6
(22) Anmeldetag: 06.10.2008
(51) Int. Cl.: B60M 1/20

(54) **Bauteil für eine Fahrleitungsanlage**

(30) Priorität: 21.12.2007 DE 102007061937
(71) Anmelder: Siemens Aktiengesellschaft, 80333 München (DE)
(72) Erfinder: Leray, Philippe, 91052, Erlangen (DE); Hoffmann, Martin, 91315, Höchstadt/Aisch (DE)

(57) **Zusammenfassung**

Die Erfindung betrifft ein Bauteil für eine Fahrleitungsanlage, das ein stabförmiges Kunststoffteil (1 bis 4) aus glasfaserverstärktem Kunststoff (GFK) und insbesondere ein Seitenhalter ist. Es ist nach einer ersten Ausführungsform vorgesehen, dass das stabförmige Kunststoffteil (1, 3 oder 4) auf gegenüberliegenden Seiten sich in Längsrichtung erstreckende Ausnehmungen (5, 6) aufweist. Nach einer zweiten Ausführungsform weist das stabförmige Kunststoffteil (2, 3 oder 4) ein aus Fasern bestehendes Verstärkungsteil, zum Beispiel ein schlauchartiges Verstärkungsteil 7, auf. Es ist auch eine Kombination beider Ausführungsformen möglich.

## Beschreibung

Die Erfindung betrifft ein Bauteil für eine Fahrleitungsanlage, das ein stabförmiges Kunststoffteil aus glasfaserverstärktem Kunststoff (GFK) und insbesondere ein Seitenhalter ist.

Eine Fahrleitungsanlage benötigt zum Halten des Fahrdrahtes und des Tragseiles außer den Stützen zahlreiche Bauteile, die zwischen Stütze und Fahrdraht oder Tragseil angeordnet sind. Ein solches Bauteil ist beispielsweise der Seitenhalter, der unmittelbar den Fahrdraht hält.

Derartige Bauteile sind häufig aus glasfaserverstärktem Kunststoff (GFK) gefertigt. Es handelt sich dabei in der Regel um stabförmige Kunststoffteile.

Aufgrund äußerer Einwirkungen, die z. B. auf die Masse des Fahrdrahtes und des Tragseiles, auf von diesen ausgehende Kräfte oder auf Windeinflüsse zurückzuführen sind, unterliegen Seitenhalter, aber auch andere stabförmige Kunststoffteile der Fahrleitungsanlage, einer Biegebeanspruchung. Die stabförmigen Kunststoffteile aus GFK müssen den zu erwartenden Biegebeanspruchungen standhalten. Es darf weder zu einem Bruch noch zu einer anderen Beschädigung kommen. Darüber hinaus sind bleibende Verbiegungen, auch wenn sie die Sicherheit nicht gefährden, unerwünscht, wenn sie sofort sichtbar sind.

Um Beschädigungen oder bleibende Verbiegungen zu vermeiden, mindestens aber zu begrenzen, ist es bisher üblich gewesen, die Länge eines stabförmigen Kunststoffteiles zu begrenzen und stattdessen gegebenenfalls die Anzahl der Kunststoffteile zu erhöhen. Es ist auch schon vorgeschlagen worden, zwei Seitenhalter an jedem Stützpunkt anzubringen. Zur Verbesserung der Stabilität stabförmiger Kunststoffteile wurde auch schon ein ovaler oder ein rechteckiger Querschnitt vorgeschlagen.

Auch ein vergrößerter Querschnitt dient dazu, das Kunststoffteil steifer zu machen. Eine andere Möglichkeit besteht darin, die gesamte Planung der Fahrleitungsanlage auf die maximal mögliche Biegebeanspruchung der Kunststoffteile hin auszurichten.

Alle bisher bekannten Maßnahmen sind entweder aufwändig, wie z. B. die spezielle Anlagenplanung oder die Verwendung einer doppelten Anzahl Seitenhalter, oder sie benötigen größere und teuere Bauteile oder sie erzielen nicht den gewünschten Erfolg.

Der Erfindung liegt die Aufgabe zugrunde, ein Bauteil für eine Fahrleitungsanlage, das ein stabförmiges Kunststoffteil aus GFK ist, so aufzubauen, dass es mit wenig Material auskommt und trotzdem so stabil ist, dass es den zu erwartenden Biegebeanspruchungen standhält. Es soll keine auf die Biegebeanspruchung der Kunststoffteile ausgerichtete Planung der Fahrleitungsanlage notwendig sein.

Die Aufgabe wird nach einer ersten Ausführungsform dadurch gelöst, dass das stabförmige Kunststoffteil auf gegenüberliegenden Seiten sich in Längsrichtung erstreckende Ausnehmungen aufweist.

Damit wird der Vorteil erzielt, dass die Beigesteifigkeit höher ist als bei einem vergleichbaren stabförmigen Kunststoffteil mit rundem, ovalem oder rechteckigem Querschnitt. Man erhält mit wenig Material ein stabiles stabförmiges Kunststoffteil.

Beispielsweise ist der Querschnitt des stabförmigen Kunststoffteiles ein in der Mitte eingeschnürtes Oval. Eine solche Form ist einfach herzustellen, benötigt wenig Material und ist trotzdem ausreichend biegesteif.

Nach einer zweiten Ausführungsform wird die Aufgabe dadurch gelöst, dass das stabförmige Kunststoffteil ein aus Fasern bestehendes Verstärkungsteil aufweist.

Durch ein solches aus Fasern bestehendes Verstärkungsteil wird die Biegesteifigkeit des Kunststoffteiles deutlich vergrößert. Das gilt selbst dann, wenn das Kunststoffteil sonst gegenüber seiner ursprünglichen Form unverändert ist.

Beispielsweise weist das stabförmige Kunststoffteil, das ein aus Fasern bestehendes Verstärkungsteil aufweist, trotzdem auf gegenüberliegenden Seiten sich in Längsrichtung erstreckende Ausnehmungen auf. Durch diese Kombination aus dem Einsatz eines aus Fasern bestehenden Verstärkungsteiles und den sich in Längsrichtung erstreckenden Ausnehmungen wird die Stabilität und Biegesteifigkeit des stabförmigen Kunststoffteiles gegenüber bekannten Lösungen besonders deutlich vergrößert. Ein solches Kunststoffteil ist als Bauteil für eine Fahrleitungsanlage, insbesondere als Seitenhalter, besonders gut geeignet.

Der Querschnitt des stabförmigen Kunststoffteiles ist beispielsweise ein in der Mitte eingeschnürtes Oval.

Beispielsweise ist das stabförmige Kunststoffteil von einem schlauchartigen Verstärkungsteil umfasst.

Nach einem anderen Beispiel ist das stabförmige Kunststoffteil von einem zweiteiligen Verstärkungsteil bestehend aus einem oberen Teil und einem unteren Teil umfasst, indem das stabförmige Kunststoffteil durch das obere Teil von oben und durch das untere Teil von unten jeweils teilweise umfasst ist, wobei sich das obere und das untere Teil an beiden Seiten des stabförmigen Kunststoffteiles überlappen. Auf diese Weise ist das Verstärkungsteil besonders einfach anzubringen.

Durch die Umfassung des stabförmigen Kunststoffteiles wird eine gute Biegesteifigkeit erzielt.

Nach einem anderen Beispiel ist im stabförmigen Kunststoffteil als Verstärkungsteil eine Einlage eingefügt, die sich scheibenförmig senkrecht zur bevorzugten Biegerichtung des stabförmigen Kunststoffteiles erstreckt. Auch durch eine solche Einlage, die weniger Material als eine vollständige Umfassung des stabförmigen Kunststoffteiles benötigt, wird die Biegesteifigkeit des Kunststoffteiles deutlich erhöht.

Beispielsweise ist das Verstärkungsteil aus Fasern gewebt, gewirkt oder geflochten. Auch eine Kombination aus zwei oder drei der genannten Herstellungsweisen ist möglich. Die Fasern sind durch jede der genannten Möglichkeiten fest miteinander verbunden.

Das Verstärkungsteil hat beispielsweise eine orthogonal gewebte Struktur oder eine diagonal gewebte Struktur.

Beispielsweise weist das Verstärkungsteil an seinen Rändern eine verstärkende Webkante auf.

Durch eine diagonal gewebte Struktur in Verbindung mit einer Webkante erzielt man eine deutliche Erhöhung der Stabilität des Verstärkungsteiles.

Mit dem Bauteil für eine Fahrleitungsanlage nach der Erfindung wird insbesondere der Vorteil erzielt, dass die zu erwartenden Biegebeanspruchungen des stabförmigen Kunststoffteiles aus GFK weder zu Schäden noch zu bleibenden Verformungen am Kunststoffteil führen, obwohl der Materialaufwand und auch der logistische Aufwand bei der Anlagenplanung klein sind.

Ausführungsbeispiele für das Bauteil nach der Erfindung, das ein stabförmiges Kunststoffteil aus GFK ist, werden anhand der Zeichnung näher erläutert:
- Figur 1: zeigt einen Querschnitt durch ein stabförmiges Kunst- stoffteil, das Ausnehmungen auf gegenüberliegenden Seiten aufweist,
- Figur 2: zeigt einen Querschnitt durch ein stabförmiges Kunst- stoffteil, das von einem schlauchartigen Verstär- kungsteil umfasst ist,
- Figur 3: zeigt einen Querschnitt durch ein stabförmiges Kunst- stoffteil, das Ausnehmungen aufweist und von einem zweiteiligen Verstärkungsteil umfasst ist,
- Figur 4: zeigt einen Querschnitt durch ein stabförmiges Kunst- stoffteil, das Ausnehmungen aufweist und in das als Verstärkungsteil eine Einlage eingefügt ist,
- Figur 5: zeigt eine orthogonal gewebte Struktur mit Webkante für ein Verstärkungsteil,
- Figur 6: zeigt eine diagonal gewebte Struktur mit Webkante für ein Verstärkungsteil.

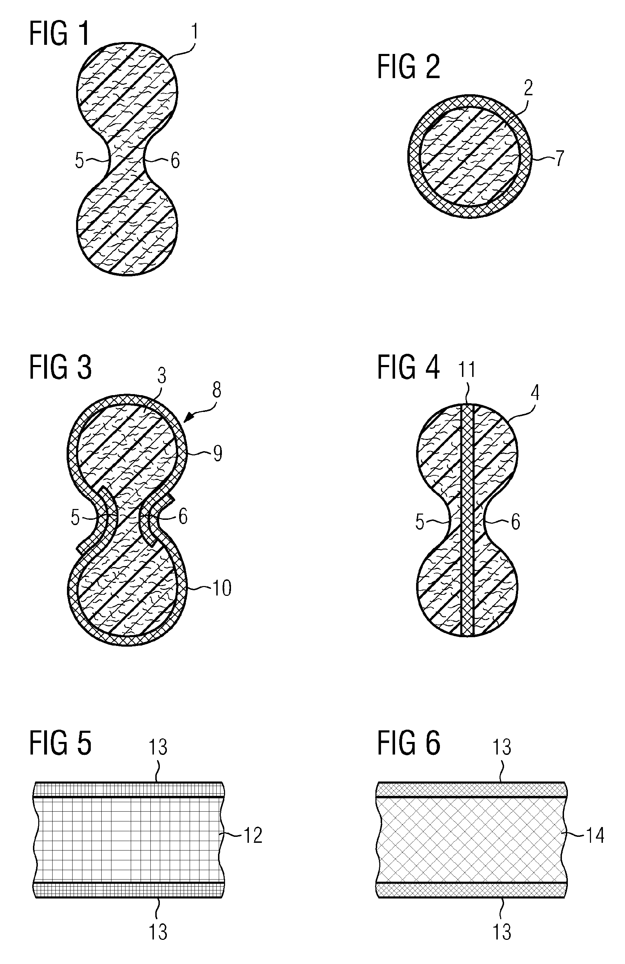

Die Figuren 1 bis 4 zeigen jeweils einen Querschnitt eines stabförmigen Kunststoffteiles 1 bis 4 aus glasfaserverstärktem Kunststoff (GFK), das für eine Fahrleitungsanlage bestimmt ist und beispielsweise ein Seitenhalter ist.

Figur 1 zeigt ein stabförmiges Kunststoffteil 1 aus GFK, das an einander gegenüberliegenden Seiten Ausnehmungen 5 und 6 aufweist, die sich in Längsrichtung des stabförmigen Kunststoffteiles 1 erstrecken.

Figur 2 zeigt ein anderes stabförmiges Kunststoffteil 2 aus GFK, das einen runden Querschnitt hat und von einem aus Fasern bestehenden schlauchartigen Verstärkungsteil 7 umfasst ist.

Figur 3 zeigt ein wieder anderes stabförmiges Kunststoffteil 3 aus GFK, das wie das stabförmige Kunststoffteil 1 nach Figur 1 Ausnehmungen 5 und 6 aufweist und zusätzlich von einem zweiteiligen aus Fasern bestehenden Verstärkungsteil 8 umgeben ist, das aus einem oberen Teil 9 und einem unteren Teil 10 besteht, die einander überlappen.

Figur 4 zeigt ein nochmals anderes stabförmiges Kunststoffteil 4 aus GFK, das wie das stabförmige Kunststoffteil 1 nach Figur 1 Ausnehmungen 5 und 6 aufweist. Als Verstärkungsteil ist in der Mitte des stabförmigen Kunststoffteiles 4 sich in Längsrichtung erstreckend eine Einlage 11 eingefügt, die aus Fasern besteht.

Figur 5 zeigt als Beispiel für den Aufbau eines Verstärkungsteiles 7 oder 8 oder einer Einlage 11 eine orthogonal gewebte Struktur 12 mit Webkanten 13 an den Rändern.

Figur 6 zeigt als anderes Beispiel für den Aufbau eines Verstärkungsteiles 7 oder 8 oder einer Einlage 11 eine diagonal gewebte Struktur 14 mit Webkanten 13 an den Rändern.

Mit einem stabförmigen Kunststoffteil 1 bis 4 für eine Fahrleitungsanlage, das z. B. ein Seitenhalter ist, und das entweder Ausnehmungen 5 und 6 oder aus Fasern bestehend ein Verstärkungsteil 7 oder 8 oder eine Einlage 11 aufweist, wird der besondere Vorteil erzielt, dass Biegebeanspruchungen keinen Schaden und sogar keine bleibenden Veränderungen hervorrufen können. Gleiches gilt in besonderem Maße für eine Kombination aus Ausnehmungen 5 und 6 und Verstärkungsteil 7 oder 8 bzw. Einlage 11.

## Patentansprüche

1. Bauteil für eine Fahrleitungsanlage, das ein stabförmiges Kunststoffteil (1, 3 oder 4) aus glasfaserverstärktem Kunststoff (GFK) und insbesondere ein Seitenhalter ist, **dadurch gekennzeichnet, dass** das stabförmige Kunststoffteil (1, 3 oder 4) auf gegenüberliegenden Seiten sich in Längsrichtung erstreckende Ausnehmungen (5, 6)aufweist.

2. Bauteil nach Anspruch 1, **dadurch gekennzeichnet, dass** der Querschnitt des stabförmigen Kunststoffteiles (1, 3 oder 4) ein in der Mitte eingeschnürtes Oval ist.

3. Bauteil für eine Fahrleitungsanlage, das ein stabförmiges Kunststoffteil (2, 3 oder 4) aus glasfaserverstärktem Kunststoff (GFK) und insbesondere ein Seitenhalter ist, **dadurch gekennzeichnet, dass** das stabförmige Kunststoffteil (2, 3 oder 4) ein aus Fasern bestehendes Verstärkungsteil aufweist.

4. Bauteil nach Anspruch 3, **dadurch gekennzeichnet, dass** das stabförmige Kunststoffteil (3 oder 4) auf gegenüberliegenden Seiten sich in Längsrichtung erstreckender Ausnehmungen (5, 6) aufweist.

5. Bauteil nach Anspruch 4, **dadurch gekennzeichnet, dass** der Querschnitt des stabförmigen Kunststoffteiles (3 oder 4) ein in der Mitte eingeschnürtes Oval ist.

6. Bauteil nach einem der Ansprüche 3 bis 5, **dadurch gekennzeichnet, dass** das stabförmige Kunststoffteil (2) von einem schlauchartigen Verstärkungsteil (7) umfasst ist.

7. Bauteil nach einem der Ansprüche 3 bis 5, **dadurch gekennzeichnet, dass** das stabförmige Kunststoffteil (3) von einem zweiteiligen Verstärkungsteil (8) bestehend aus einem oberen Teil (9) und einem unteren Teil (10) umfasst ist, indem das stabförmige Kunststoffteil (3) durch das obere Teil (9) von oben und durch das untere Teil (10) von unten jeweils teilweise umfasst ist und dass sich das obere Teil (9) und das untere Teil (10) an beiden Seiten des stabförmigen Kunststoffteiles (3) überlappen.

8. Bauteil nach einem der Ansprüche 3 bis 7, **dadurch gekennzeichnet, dass** im stabförmigen Kunststoffteil (4) als Verstärkungsteil eine Einlage (11) eingefügt ist, die sich scheibenförmig senkrecht zur bevorzugten Biegerichtung des stabförmigen Kunststoffteiles (4) erstreckt.

9. Bauteil nach einem der Ansprüche 3 bis 8, **dadurch gekennzeichnet, dass** das Verstärkungsteil aus Fasern gewebt, gewirkt oder geflochten ist.

10. Bauteil nach Anspruch 9, **dadurch gekennzeichnet, dass** das Verstärkungsteil eine orthogonal gewebte Struktur (12) oder eine diagonal gewebte Struktur (14) hat.

11. Bauteil nach einem der Ansprüche 9 oder 10, **dadurch gekennzeichnet, dass** das Verstärkungsteil an seinen Rändern eine verstärkende Webkante (13) aufweist.
